# EUROPEAN PATENT SPECIFICATION

(11) **EP 4 390 331 B1**
(45) Date of publication and mention of the grant of the patent: **13.05.2026**
(21) Application number: 23290004.3
(22) Date of filing: 23.01.2023
(51) Int. Cl.: G01D 11/24

(54) **ELECTRONIC SENSOR ASSEMBLY HAVING A SIMPLIFIED STRUCTURE**
ELEKTRONISCHE SENSORANORDNUNG MIT VEREINFACHTER STRUKTUR
ENSEMBLE CAPTEUR ÉLECTRONIQUE À STRUCTURE SIMPLIFIÉE

(30) Priority: 22.12.2022 EP 22290082
(43) Date of publication of application: 26.06.2024
(73) Proprietor: Leoni Wiring Systems France, 78180 Montigny le Bretonneux (FR)
(72) Inventor: Macheboeuf, Pierre, 92420 Vaucresson (FR); Mathey, Jean-Marc, 92380 Garches (FR); Rouland, Hervé, 78955 Carrières sous Poissy (FR)
(74) Representative: FDST Patentanwälte

(56) References cited:
- DE-A1- 102021 205 841
- FR-A1- 2 864 700
- US-A1- 2015 354 990

## Description

The invention relates to the field of electronic sensors, in particular sensors intended to measure a relevant physical quantity in a motor vehicle, for example a temperature or a brightness.

The state of the art already describes a sensor assembly comprising:
- at least one electronic sensor member for measuring a physical quantity, and
- two electrical connection conductors for connecting this electronic sensor member that are soldered to two corresponding connection pins of this electronic sensor member.

Usually, the two electrical connection conductors for connecting the electronic sensor member are formed by tracks of a printed circuit. The printed circuit generally comprises a rigid support consisting of a plate, the conductive tracks of the printed circuit being arranged on at least one face of the support.

The printed circuit is usually connected to an electrical power source by flexible conductors. In the state of the art, it is therefore necessary firstly to connect the flexible electrical power supply conductors to the printed circuit, generally by soldering, and secondly to connect the electronic sensor member to the conductive tracks on the printed circuit, also generally by soldering.

It is known to use whenever possible "surface mounted components", usually designated by the acronym SMC. A component of this type comprises connection pins intended to be soldered to the surface of conductive tracks, without crossing through the printed circuit support.

DE 10 2021 205 841 A1 shows a printed circuit board on which electronic components are mounted. Electrical conductors are connected to the printed circuit board.

US 2015/0354990 A1 shows a sensor for sensing an angular position comprising a rotatable, annular encoder and an annular sensor body having a printed circuit board with sensing elements, which are connected by pins to the printed circuit board. Electric wires are connected to the circuit board by soldering.

FR 2 864 700 A1 shows a wheel sensor having an electronic unit which is overmolded with a housing part.

The cost of producing a sensor assembly therefore depends in particular on the cost of the printed circuit and the cost of the numerous soldering operations.

However, the new technologies used more and more frequently in motor vehicles require an increasing number of sensors, in particular temperature sensors, but also other types of sensors such as brightness sensors, intended to check the correct operation of the various items of electronic equipment, in particular power electronic equipment.

Whenever possible therefore, the aim is to limit the cost of manufacturing an electronic sensor assembly, in particular by simplifying its structure.

The invention therefore aims to propose a sensor assembly of limited manufacturing cost which allows the use of "surface mount" type soldering technologies.

The invention therefore relates to a sensor assembly as defined in claim 1.

Since the two connection pins of the electronic member are soldered directly to the two corresponding stripped parts of the flexible conductors, flexible electrical power supply conductors can therefore be connected directly to the electronic sensor member, without the need for a printed circuit. The cost of manufacturing a sensor assembly is therefore reduced by removing the need for a printed circuit.

In addition, this avoids the risk of accidentally separating the electronic member from the stripped parts of the flexible conductors by housing the flexible conductors and the electronic member in a body comprising means for immobilising the flexible conductors in the three directions perpendicular to each other.

In addition, it is quite possible to solder the sensor electronic member to the corresponding stripped parts of the flexible conductors using a "surface mount" type soldering technology.

According to a particular embodiment of the invention, the first and second parts of the body comprise complementary junction faces which, when these parts are in a configuration in which the assembly is used, are pressing against each other and parallel to the longitudinal and transverse directions, the flexible conductors extending parallel to the longitudinal direction, the means for immobilising the conductors comprising transverse immobilisation means formed in the first part of the body. Preferably, the longitudinal and transverse directions define together a plane to which the complementary junction faces are parallel in a configuration in which the assembly is used. It is therefore easy to immobilise the electrical connection conductors in the transverse direction, using means arranged in the first part of the body.

According to a particular embodiment of the invention, to efficiently immobilise the electrical connection conductors in the transverse direction, the transverse immobilisation means comprise at least two transversally opposed longitudinal stops, extending parallel to the stripped parts of the flexible conductors, formed in the first part of the body, between which extend transverse bracing stops, formed in the first part of the body, each stripped part of a conductor extending between at least one longitudinal stop and one bracing stop.

Preferably, the transverse immobilisation means comprise grooves, formed in the first part of the body, into which the coated parts of the conductors are inserted.

To avoid damaging the soldered joints of the electronic members when the conductors are subjected to tractive forces in the longitudinal direction, according to a particular embodiment of the invention, the means for immobilising the conductors comprise longitudinal immobilisation means formed in a complementary manner on the first and second parts of the body, intended to immobilise each conductor in the longitudinal direction by blocking in a chicane, formed by these longitudinal immobilisation means, of a part of a conductor selected from the stripped part of the conductor and the coated part of the conductor.

To efficiently immobilise the stripped part of each conductor in the longitudinal direction, according to a particular embodiment of the invention, the longitudinal immobilisation means comprise a boss formed in the first part of the body, extending in the transverse direction between the longitudinal stops, and a complementary recess formed in the second part of the body, the stripped part of each conductor extending along a chicane between the boss and the complementary recess.

To efficiently immobilise the coated part of each conductor in the longitudinal direction, according to a particular embodiment of the invention, the longitudinal immobilisation means comprise wedges formed in the second part of the body, offset in the longitudinal direction relative to the transverse immobilisation grooves, the coated part of each conductor extending against the wedges and corresponding grooves along a chicane.

Preferably, to make it easier for an operator to mount the sensor assembly, the first part of the body forms, using the means for immobilising the conductors arranged on this first part of the body, a support for the intermediate mounting of the sensor assembly capable of positioning the flexible conductors to solder, especially using a surface mount technology, the connection pins of the electronic member to the corresponding stripped parts of the flexible conductors.

To efficiently immobilise the conductors in the vertical direction, according to a particular embodiment of the invention, the means for immobilising the conductors comprise vertical immobilisation means formed in a complementary manner on the first and second parts of the body, these vertical immobilisation means comprising complementary vertical clamping stops formed in the first and second parts of the body, between which each stripped part of a conductor is inserted, each clamping stop formed in the second part of the body being elastically stressed towards the other complementary clamping stop formed in the first part of the body.

Preferably, the body is made of plastic, for example by moulding.

According to a particular embodiment of the invention, to efficiently immobilise the conductors in the vertical direction without damaging them, the second part of the body comprises a plastic handle, elastically deformable in the vertical direction, in which each clamping stop carried by this second part of the body is formed.

According to a particular embodiment of the invention, to make it easier to assemble the first part of the body with the second part of the body and to prevent them from separating during use, the first and second parts of the body are provided with complementary means for attaching them together by clipping.

Preferably, each core of a conductor is formed by a plurality of conductive strands, the strands of the stripped part of a conductor being agglomerated together, the stripped part of a conductor preferably being flattened so that it has at least one flat face to form a junction with a connection pin of the electronic sensor member.

### Brief description of the figures

The invention will be better understood on reading the following description, given solely by way of example and with reference to the accompanying drawings in which:
[Fig. 1] is a perspective view of a sensor assembly according to the invention;
[Fig. 2] is a perspective view of a first part of a body of this sensor assembly housing flexible conductors;
[Fig. 3] is a perspective view of a second part of the body of this sensor assembly housing the flexible conductors, this second part of the body being shown from underneath with respect to its position seen from above on figure 1; and
[Fig. 4] is a perspective view, similar to figure 3, not showing the flexible conductors.

### Detailed description

The figures show a sensor assembly, according to the invention, designated by the general reference 10. This sensor assembly 10 is intended, for example, to be installed in a motor vehicle.

The assembly 10 comprises a body 12 housing two flexible conductors 14.

The assembly 10 also comprises at least one electronic sensor member for measuring a physical quantity. In the example described, the assembly 10 comprises a first electronic member, for example a photodiode, forming a brightness sensor 16, and a second electronic member, for example a thermistor, forming a temperature sensor 18.

The electronic members 16, 18 are housed in the body 12. Each electronic member 16, 18 comprises a pair of electrical connection pins 16P, 18P.

Note that the electronic members 16, 18 are of the surface mounted type, in particular in compliance with the SMC technology.

The body 12 is made of plastic, preferably by moulding.

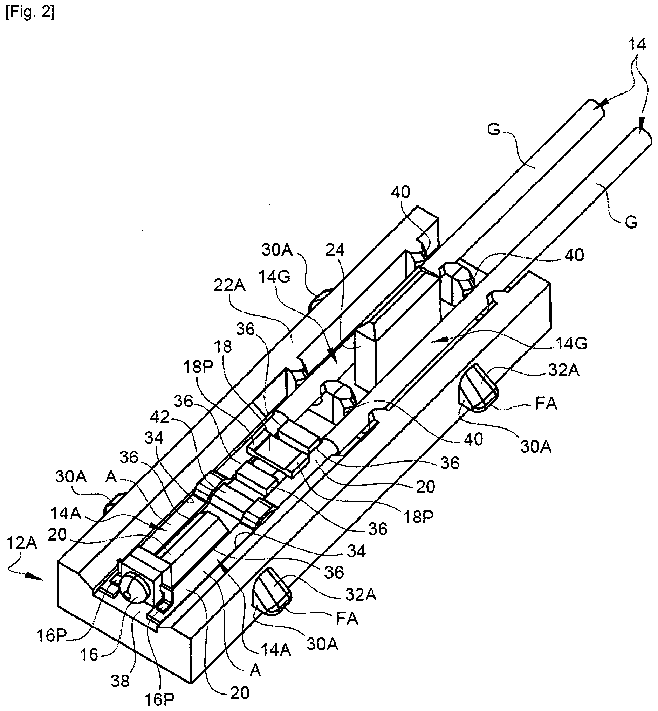

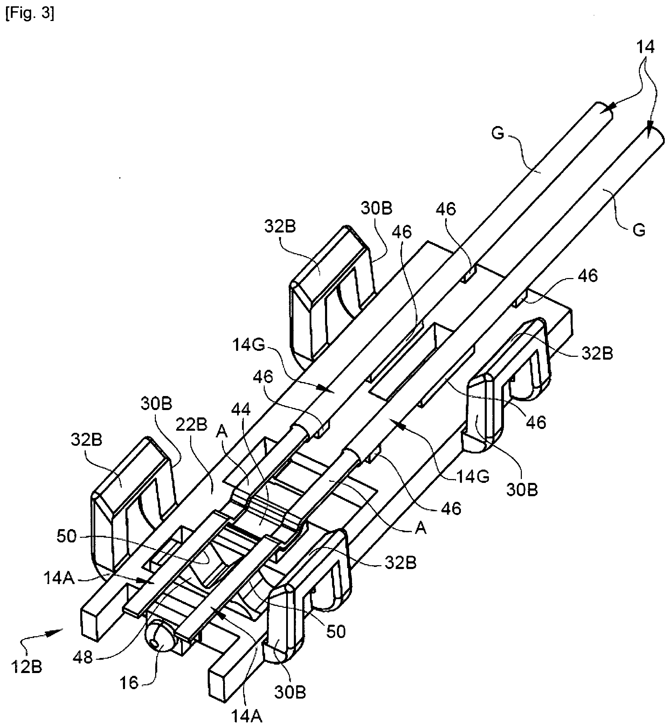

As shown in particular on figures 2 and 3, each flexible conductor 14 is provided with a conductive core A and an insulating sheath G. The sheath G is interrupted to separate a so-called "coated" part 14G of the conductor 14, in which the sheath G covers the core A, and a so-called "stripped" part 14A of the conductor 14, in which the sheath is removed from the core A.

In the example described, the core A of each conductor 14 is formed by a plurality of conductive strands. The strands of the stripped part 14A of the conductor 14 are agglomerated together, using a known method, for example by fusion.

Preferably, the stripped part 14A of the conductors 14 is flattened so that it has at least one flat face 20 to form a junction with a connection pin of an electronic member 16, 18. Thus, referring in particular to figure 2, we see that the flat faces 20 of the stripped parts 14A of the two conductors 14 are soldered, by surface mounting, to the two corresponding connection pins 16P, 18P of each electronic member 16, 18.

The two flexible conductors 14 can therefore be used to electrically connect each electronic member 16, 18, for example to an electrical power source or a control circuit.

Referring in particular to figures 2 and 3, we see that the body 12 comprises first 12A and second 12B parts that can be separated from each other between a configuration in which the flexible conductors 14 and each electronic member 16, 18 are mounted in the body 12 and a configuration in which the sensor assembly 10 is used.

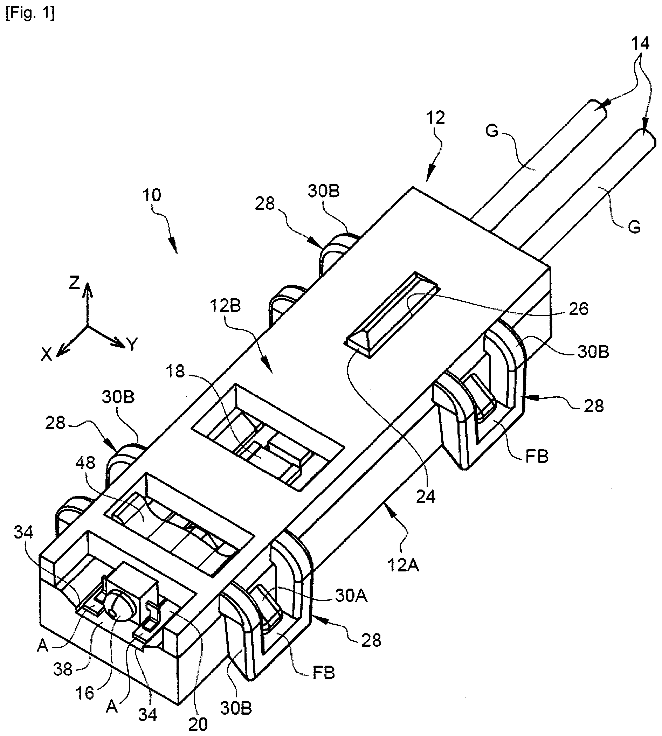

When using the assembly 10, to avoid the risk of accidentally separating an electronic member 16, 18 from the stripped parts 14A of the flexible conductors 14, the body 12 comprises means for immobilising these conductors 14 in three directions perpendicular to each other, referred to respectively as longitudinal X, transverse Y and vertical Z (refer to the X, Y, Z orthogonal coordinate system shown on figure 1). The conductors 14 extend in the body 12 parallel to the longitudinal direction X.

The immobilisation means are distributed in the two parts 12A, 12B of the body 12.

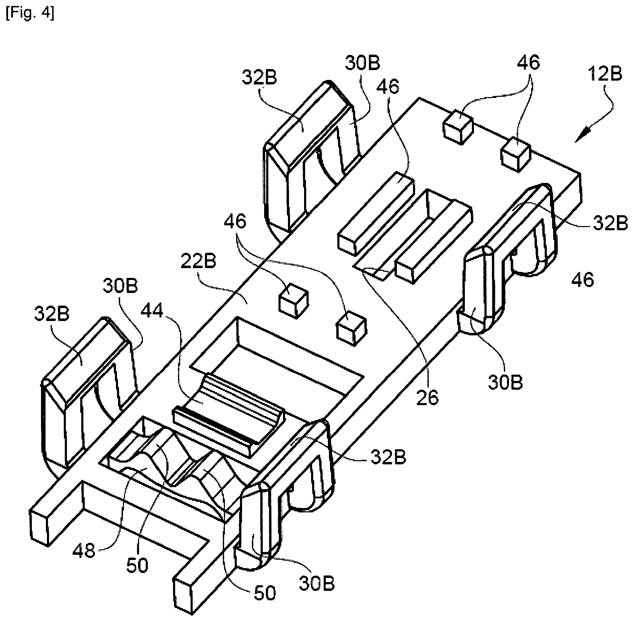

Referring in particular to figures 2 and 4, we see that the first 12A and second 12B parts of the body 12 comprise complementary junction faces 22A, 22B.

When these parts 12A, 12B are in the configuration in which the assembly 10 is used, as shown on figure 1, the complementary junction faces 22A, 22B are pressing against each other and parallel to the longitudinal X and transverse Y directions.

Note that the first 12A and second 12B parts of the body 12 are provided with complementary relative positioning means with respect to the longitudinal X and transverse Y directions. Referring in particular to figures 1, 2 and 4, we see that, in the example described, these relative positioning means comprise a stud 24, of general prismatic shape with rectangular cross-section, attached to the first part 12A of the body 12, and a positioning hole 26 of complementary shape, formed in the second part 12B of the body 12. Preferably, the positioning stud 24 is made in one piece with the first part 12A of the body 12.

To keep the first 12A and second 12B parts of the body 12 in the configuration in which the sensor assembly 10 is used, these parts 12A, 12B are provided with complementary means for attaching them together by clipping.

Referring in particular to figures 1 to 3, we see that, in the example described, these complementary attachment means comprise at least two clipping assemblies 28 arranged respectively on two opposite longitudinal sides of the assembly 10. Preferably, as in the example shown, each clipping assembly 28 comprises two complementary clipping members, respectively male 30A and female 30B. The male clipping member 30A is made in one piece with the first part 12A of the body 12 and the female clipping member 30B is made in one piece with the second part 12B of the body 12.

The male 30A and female 30B clipping members comprise respectively complementary clipping faces FA and FB which, when they cooperate together, immobilise the junction faces 22A, 22B of the parts 12A, 12B pressing against each other to keep them in the configuration in which the assembly 10 is used, as shown on figure 1.

The male 30A and female 30B clipping members comprise respectively complementary elastically deformable ramps 32A, 32B intended to cooperate together between a position in which the complementary clipping faces FA, FB are separated and a position in which these clipping faces FA, FB cooperate (see in particular figures 1 to 3).

Referring in particular to figure 2, we see that the means for immobilising the flexible conductors 14 in the body 12 comprise transverse immobilisation means formed in the first part 12A of the body 12.

These transverse immobilisation means comprise at least two transversally opposed longitudinal stops 34, extending parallel to the stripped parts 14A of the flexible conductors 14. These longitudinal stops 34 are formed in the first part 12A of the body 12. In the example shown, each longitudinal stop 34 is continuous in the longitudinal direction. However, according to a variant not shown, at least one of the longitudinal stops 34 can be interrupted locally in the longitudinal direction.

The transverse immobilisation means further comprise transverse bracing stops 36, formed in the first part 12A of the body 12. Note that in the example shown, the transverse bracing stops 36 are interrupted locally in the longitudinal direction. These transverse bracing stops 36 extend between the longitudinal stops 34.

Each stripped part 14A of a conductor extends between at least one longitudinal stop 34 and one bracing stop 36 so that it is immobilised in the transverse direction in the body 12.

Note that the longitudinal stops 34 and the bracing stops 36 are formed by faces of the first part 12A of the body 12 substantially perpendicular to a support face 38 supporting the stripped parts 14A of the conductors 14, said support face 38 extending in the transverse direction between these stops 34, 36.

As shown on figure 2, the transverse immobilisation means further comprise grooves 40, formed in the first part 12A of the body 12, into which the coated parts 14G of the conductors 14 are inserted. Preferably, as in the example shown, the coated part 14G of each conductor 14 is inserted in two grooves 40 spaced apart in the longitudinal direction and aligned with each other.

To prevent an accidental longitudinal displacement of the flexible conductors 14 in the body 12 under the effect of a tractive force exerted on these conductors 14, the means for immobilising the conductors 14 comprise longitudinal immobilisation means formed in a complementary manner on the first 12A and second 12B parts of the body 12, intended to immobilise each conductor 14 in the longitudinal direction by blocking in at least one chicane.

In particular, as shown in particular on figures 2 to 4, the longitudinal immobilisation means comprise a boss 42 formed in the first part 12A of the body 12. This boss 42 extends in the transverse direction between the opposite longitudinal stops 34. As shown on figures 3 and 4, the longitudinal immobilisation means also comprise a recess 44 of a shape complementary to that of the boss 42 formed in the second part 12B of the body 12.

Thus, the stripped part 14A of each conductor 14 is bent locally to extend along a chicane between the boss 42 and the complementary recess 44.

Preferably, the longitudinal immobilisation means also comprise wedges 46 formed in the second part 12B of the body 12. These wedges 46, preferably made in one piece with the second part 12B of the body 12, are offset in the longitudinal direction relative to the transverse immobilisation grooves 40. Thus, the coated part 14G of each conductor 14 extends against the wedges 46 and corresponding grooves 40 along a chicane. Note that, in the example shown, the coated part 14G of each conductor 14 is pressing against three wedges 46 aligned in the longitudinal direction.

Advantageously, the means for immobilising the conductors 14 arranged on the first part 12A of the body, as described above, allow the first part 12A of the body 12, before assembling together the parts 12A, 12B of the body 12, to form a support capable of positioning the flexible conductors 14, during a step of intermediate mounting of the assembly 10, to solder, especially using a surface mount technology, the connection pins 16P, 18P of each electronic member 16, 18 to the corresponding stripped parts 14A of the conductors 14.

The means for immobilising the conductors 14 also comprise vertical immobilisation means formed in a complementary manner on the first 12A and second 12B parts of the body 12.

As shown on figures 1, 3 and 4, the vertical immobilisation means comprise complementary vertical clamping stops formed in the first 12A and second 12B parts of the body 12, between which each stripped part 14A of a conductor 14 is inserted.

Preferably, as in the example shown, the vertical clamping stop formed in the first part 12A of the body 12 is common to the two stripped parts 14A respectively of the two conductors 14 and is formed by the support face 38 formed in the first part 12A of the body 12.

Also preferably, as in the example shown, the second part 12B of the body 12 comprises a plastic handle 48, elastically deformable in the vertical direction, made in one piece with this second part 12B of the body 12. This handle 48 comprises two vertical projections 50 each forming a vertical clamping stop formed in the second part 12B of the body 12. Thus, when the two parts 12A, 12B of the body are attached together, each vertical clamping stop 50 formed in the handle 48 is elastically stressed towards the support face 38 forming the other complementary clamping stop formed in the first part 12A of the body, so as to pinch in the vertical direction a corresponding stripped part 14A of a conductor.

Note that the grooves 40 and the wedges 46 also help to immobilise the conductors 14 in the body 12 in the vertical direction.

The invention is not limited to the embodiment described above.

In particular, the core A of a conductor 14 may consist of a single conductive strand. In addition, the stripped part 14A of the conductors 14, whether multi-strand or not, may not be flattened while still allowing a connection pin of an electronic member 16, 18 to be soldered to the core A.

Furthermore, concerning the immobilisation in the longitudinal direction of each conductor 14, this conductor 14 could possibly be immobilised in the longitudinal direction by a single chicane cooperating with a part of a conductor 14 selected from the stripped part 14A of the conductor 14 and the coated part 14G of the conductor 14.

In addition, the complementary means for attaching the first and second parts of the body do not have to be clipping attachment means, but could be for example screwing or bonding attachment means.

### List of references

10: Sensor assembly
12: Body
12A: First part of the body
12B: Second part of the body
14: Flexible conductors
14A: Stripped part of the flexible conductor
14G: Coated part of the flexible conductor
16: Brightness sensor
16P: Electrical connection pins of the brightness sensor
18: Temperature sensor
18P: Electrical connection pins of the temperature sensor
20: Flat junction face of the conductor
22A: Complementary junction face of the first part of the body
22B: Complementary junction face of the second part of the body
24: Positioning stud
26: Positioning hole
28: Clipping assembly
30A: Male clipping member
30B: Female clipping member
32A: Complementary elastically deformable ramps (male clipping member)
32B: Complementary elastically deformable ramp (female clipping member)
34: Longitudinal stop
36: Transverse bracing stop
38: Support face supporting the stripped parts of the conductors
40: Groove
42: Boss
44: Recess
46: Wedge
48: Handle
50: Vertical projection
A: Conductive core of the flexible conductor
FA: Complementary clipping face (male clipping member)
FB: Complementary clipping face (female clipping member)
G: Sheath of the flexible conductor
X: Longitudinal direction
Y: Transverse direction
Z: Vertical direction

## Claims

1. Sensor assembly (10) comprising:
- at least one electronic sensor member (16, 18) for measuring a physical quantity, wherein the at least one electronic sensor member (16, 18) is of the surface mounted type, and
- two flexible electrical connection conductors (14) for connecting this electronic sensor member (16, 18) that are soldered to two corresponding connection pins (16P, 18P) of this electronic sensor member (16, 18),
wherein the flexible electrical connection conductors (14) each consist of a flexible conductor (14) provided with a conductive core (A) and an insulating sheath (G), the sheath (G) being interrupted to separate a so-called coated part (14G) of the conductor, in which the sheath (G) covers the core (A), and a so-called stripped part (14A) of the conductor, in which the sheath (G) is removed from the core (A),
the two connection pins (16P, 18P) of the electronic sensor member (16, 18) being soldered directly to the two corresponding stripped parts (14A) of the flexible conductors (14),
the assembly further comprising a body (12) housing the flexible conductors (14) and the sensor member (16, 18), said body (12) comprising means (34, 36, 40, 42, 44, 46, 48, 50) for immobilising the flexible conductors in three directions perpendicular to each other, referred to respectively as longitudinal (X), transverse (Y) and vertical (Z), these immobilisation means (34, 36, 40, 42, 44, 46, 48, 50) being distributed in first (12A) and second (12B) parts of the body (12) that can be separated from each other between a configuration in which the flexible conductors (14) and the electronic sensor member (16, 18) are mounted in the body (12) and a configuration in which the sensor assembly (10) is used.

2. Sensor assembly (10) according to claim 1, wherein the first (12A) and second (12B) parts of the body (12) comprise complementary junction faces (22A, 22B) which, when these parts (12A, 12B) are in a configuration in which the assembly (10) is used, are pressing against each other and parallel to the longitudinal (X) and transverse (Y) directions,
the flexible conductors (14) extending parallel to the longitudinal direction (X),
the means for immobilising the conductors comprising transverse immobilisation means (34, 36, 40) formed in the first part of the body.

3. Sensor assembly (10) according to claim 2, wherein the transverse immobilisation means (34, 36, 40) comprise at least two transversally opposed longitudinal stops (34), extending parallel to the stripped parts (14A) of the flexible conductors (14), formed in the first part (12A) of the body (12), between which extend transverse bracing stops (36), formed in the first part (12A) of the body (12), each stripped part (14A) of a conductor extending between at least one longitudinal stop (34) and one bracing stop (36).

4. Sensor assembly (10) according to claim 2 or 3, wherein the transverse immobilisation means comprise grooves (40), formed in the first part (12A) of the body (12), into which the coated parts (14G) of the flexible conductors (14) are inserted.

5. Sensor assembly (10) according to any one of claims 1 to 4, wherein the means for immobilising the conductors comprise longitudinal immobilisation means (42, 44, 46) formed in a complementary manner on the first (12A) and second (12B) parts of the body (12), intended to immobilise each flexible conductor (14) in the longitudinal direction by blocking ir a chicane, formed by these longitudinal immobilisation means (42, 44, 46), of a part of a flexible conductor (14) selected from the stripped part (14A) of the flexible conductor (14) and the coated part (14G) of the flexible conductor (14).

6. Sensor assembly (10) according to claims 3 and 5 taken together, wherein the longitudinal immobilisation means comprise a boss (42) formed in the first part (12A) of the body (12), extending in the transverse direction between the longitudinal stops (34), and a complementary recess (44) formed in the second part (12B) of the body (12), the stripped part (14A) of each flexible conductor (14) extending along a chicane between the boss (42) and the complementary recess (44).

7. Sensor assembly (10) according to claims 4 and 5 taken together, wherein the longitudinal immobilisation means comprise wedges (46) formed in the second part (12B) of the body, offset in the longitudinal direction relative to the transverse immobilisation grooves (40), the coated part (14G) of each flexible conductor (14) extending against the wedges (46) and corresponding grooves (40) along a chicane.

8. Sensor assembly (10) according to any one of claims 2 to 7, wherein the first part (12A) of the body (12) forms, using the means (34, 36, 40, 42) for immobilising the flexible conductors (14) arranged on this first part (12A) of the body (12), a support for the intermediate mounting of the sensor assembly (10) capable of positioning the flexible conductors (14) to solder, especially using a surface mount technology, the connection pins (16P, 18P) of the electronic sensor member (16, 18) to the corresponding stripped parts (14A) of the flexible conductors (14).

9. Sensor assembly (10) according to any one of claims 1 to 8, wherein the means for immobilising the flexible conductors (14) comprise vertical immobilisation means formed in a complementary manner on the first (12A) and second (12B) parts of the body (12), these vertical immobilisation means comprising complementary vertical clamping stops (38, 50) formed in the first (12A) and second (12B) parts of the body (12), between which each stripped part (14A) of a conductor is inserted, each clamping stop (50) formed in the second part (12B) of the body (12) being elastically stressed towards the other complementary clamping stop (38) formed in the first part (12A) of the body.

10. Sensor assembly (10) according to any one of claims 1 to 9, wherein the body (12) is made of plastic, for example by moulding.

11. Sensor assembly (10) according to claims 9 and 10 taken together, wherein the second part (12B) of the body (12) comprises a plastic handle (48), elastically deformable in the vertical direction, in which each clamping stop (50) carried by this second part (12B) of the body (12) is formed.

12. Sensor assembly (10) according to claim 10 or 11, wherein the first (12A) and second (12B) parts of the body (12) are provided with complementary means (28) for attaching them together by clipping.

13. Sensor assembly (10) according to any one of claims 1 to 12, wherein each core (A) of a flexible conductor (14) is formed by a plurality of conductive strands, the strands of the stripped part (14A) of the flexible conductor (14) being agglomerated together, the stripped part (14A) of the flexible conductor (14) preferably being flattened so that it has at least one flat face (20) to form a junction with a connection pin (16P, 18P) of the electronic sensor member (16, 18).

## Patentansprüche

1. Sensoranordnung (10), umfassend:
- mindestens ein elektronisches Sensorelement (16, 18) zum Messen einer physikalischen Größe, wobei das mindestens eine elektronische Sensorelement (16, 18) vom Oberflächenmontagetyp ist, und
- zwei flexible elektrische Verbindungsleiter (14) zum Verbinden dieses elektronischen Sensorelements (16, 18), die an zwei entsprechende Verbindungsstifte (16P, 18P) dieses elektronischen Sensorelements (16, 18) gelötet sind, wobei die flexiblen elektrischen Verbindungsleiter (14) jeweils aus einem flexiblen Leiter (14) bestehen, der mit einem leitfähigen Kern (A) und einer isolierenden Hülle (G) bereitgestellt ist, wobei die Hülle (G) unterbrochen ist, um einen sogenannten beschichteten Teil (14G) des Leiters, in dem die Hülle (G) den Kern (A) abdeckt, und einen sogenannten abisolierten Teil (14A) des Leiters, in dem die Hülle (G) vom Kern (A) entfernt ist, zu trennen,
wobei die beiden Verbindungsstifte (16P, 18P) des elektronischen Sensorelements (16, 18) direkt an die beiden entsprechenden abisolierten Teile (14A) der flexiblen Leiter (14) gelötet sind,
die Anordnung weiter umfassend einen Körper (12), der die flexiblen Leiter (14) und das Sensorelement (16, 18) aufnimmt, der Körper (12) umfassend Mittel (34, 36, 40, 42, 44, 46, 48, 50) zum Fixieren der flexiblen Leiter in drei zueinander senkrechten Richtungen, die jeweils als Längsrichtung (X), Querrichtung (Y) und Vertikalrichtung (Z) bezeichnet werden, wobei diese Fixierungsmittel (34, 36, 40, 42, 44, 46, 48, 50) in einem ersten (12A) und einem zweiten (12B) Teil des Körpers (12) verteilt sind, die zwischen einer Konfiguration, in der die flexiblen Leiter (14) und das elektronische Sensorelement (16, 18) in dem Körper (12) montiert sind, und einer Konfiguration, in der die Sensoranordnung (10) verwendet wird, voneinander getrennt werden können.

2. Sensoranordnung (10) nach Anspruch 1, wobei der erste (12A) und der zweite (12B) Teil des Körpers (12) komplementäre Kontaktstellenstirnflächen (22A, 22B) umfassen, die, wenn sich diese Teile (12A, 12B) in einer Konfiguration befinden, in der die Anordnung (10) verwendet wird, gegeneinander und parallel zur Längsrichtung (X) und zur Querrichtung (Y) drücken, wobei sich die flexiblen Leiter (14) parallel zur Längsrichtung (X) erstrecken,
wobei die Mittel zum Fixieren der Leiter Querfixierungsmittel (34, 36, 40) umfassen, die im ersten Teil des Körpers gebildet sind.

3. Sensoranordnung (10) nach Anspruch 2, wobei die Querfixierungsmittel (34, 36, 40) mindestens zwei quer gegenüberliegende Längsanschläge (34) umfassen, die sich parallel zu den abisolierten Teilen (14A) der flexiblen Leiter (14) erstrecken, die im ersten Teil (12A) des Körpers (12) gebildet sind, zwischen denen sich quer verlaufende Versteifungsanschläge (36) erstrecken, die im ersten Teil (12A) des Körpers (12) gebildet sind, wobei sich jeder abisolierte Teil (14A) eines Leiters zwischen mindestens einem Längsanschlag (34) und einem Versteifungsanschlag (36) erstreckt.

4. Sensoranordnung (10) nach Anspruch 2 oder 3, wobei die Querfixierungsmittel Nuten (40) umfassen, die im ersten Teil (12A) des Körpers (12) gebildet sind und in die die beschichteten Teile (14G) der flexiblen Leiter (14) eingeführt werden.

5. Sensoranordnung (10) nach einem der Ansprüche 1 bis 4, wobei die Mittel zum Fixieren der Leiter Längsfixierungsmittel (42, 44, 46) umfassen, die auf komplementäre Weise auf dem ersten (12A) und dem zweiten (12B) Teil des Körpers (12) gebildet sind und dazu bestimmt sind, jeden flexiblen Leiter (14) in der Längsrichtung zu fixieren, indem in einer Schikane, die von diesen Längsfixierungsmitteln (42, 44, 46) gebildet ist, ein Teil eines flexiblen Leiters (14), ausgewählt aus dem abisolierten Teil (14A) des flexiblen Leiters (14) und dem beschichteten Teil (14G) des flexiblen Leiters (14), blockiert wird.

6. Sensoranordnung (10) nach den Ansprüchen 3 und 5 zusammen, wobei die Längsfixierungsmittel eine Nabe (42), die im ersten Teil (12A) des Körpers (12) gebildet ist und sich in Querrichtung zwischen den Längsanschlägen (34) erstreckt, und eine komplementäre Aussparung (44), die im zweiten Teil (12B) des Körpers (12) gebildet ist, umfassen, wobei sich der abisolierte Teil (14A) jedes flexiblen Leiters (14) entlang einer Schikane zwischen der Nabe (42) und der komplementären Aussparung (44) erstreckt.

7. Sensoranordnung (10) nach den Ansprüchen 4 und 5 zusammen, wobei die Längsfixierungsmittel Keile (46) umfassen, die in Längsrichtung relativ zu den Querfixierungsnuten (40) versetzt im zweiten Teil (12B) des Körpers gebildet sind, wobei sich der beschichtete Teil (14G) jedes flexiblen Leiters (14) gegen die Keile (46) und die entsprechenden Nuten (40) entlang einer Schikane erstreckt.

8. Sensoranordnung (10) nach einem der Ansprüche 2 bis 7, wobei der erste Teil (12A) des Körpers (12) unter Verwendung der Mittel (34, 36, 40, 42) zum Fixieren der auf diesem ersten Teil (12A) des Körpers (12) angeordneten flexiblen Leiter (14) eine Halterung zur Zwischenmontage der Sensoranordnung(10) bildet, die in der Lage ist, die flexiblen Leiter (14) zum Löten der Verbindungsstifte (16P, 18P) des elektronischen Sensorelements (16, 18) an die entsprechenden abisolierten Teile (14A) der flexiblen Leiter (14) zu positionieren, insbesondere unter Verwendung einer Oberflächenmontagetechnologie.

9. Sensoranordnung (10) nach einem der Ansprüche 1 bis 8, wobei die Mittel zum Fixieren der flexiblen Leiter (14) vertikale Fixierungsmittel umfassen, die auf komplementäre Weise auf dem ersten (12A) und dem zweiten (12B) Teil des Körpers (12) gebildet sind, wobei diese vertikalen Fixierungsmittel komplementäre vertikale Einspannanschläge (38, 50) umfassen, die im ersten (12A) und zweiten (12B) Teil des Körpers (12) gebildet sind und zwischen denen jeder abisolierte Teil (14A) eines Leiters eingeführt ist, wobei jeder Einspannanschlag (50), der im zweiten Teil (12B) des Körpers (12) gebildet ist, in Richtung des anderen komplementären Einspannanschlags (38), der im ersten Teil (12A) des Körpers gebildet ist, elastisch gespannt ist.

10. Sensoranordnung (10) nach einem der Ansprüche 1 bis 9, wobei der Körper (12) aus Kunststoff gefertigt ist, beispielsweise durch Formpressen.

11. Sensoranordnung (10) nach den Ansprüchen 9 und10 zusammen, wobei der zweite Teil (12B) des Körpers (12) einen Kunststoffgriff (48) umfasst, der in Vertikalrichtung elastisch verformbar ist und in dem jeder Einspannanschlag (50) gebildet ist, der von diesem zweiten Teil (12B) des Körpers (12) getragen wird.

12. Sensoranordnung (10) nach Anspruch 10 oder 11, wobei der erste (12A) und der zweite (12B) Teil des Körpers (12) mit komplementären Mitteln (28) zum Anbringen dieser aneinander durch Verrasten bereitgestellt sind.

13. Sensoranordnung (10) nach einem der Ansprüche 1 bis 12, wobei jeder Kern (A) eines flexiblen Leiters (14) von einer Vielzahl von leitfähigen Litzen gebildet ist, wobei die Litzen des abisolierten Teils (14A) des flexiblen Leiters (14) miteinander agglomeriert sind, wobei der abisolierte Teil (14A) des flexiblen Leiters (14) vorzugsweise abgeflacht ist, sodass er mindestens eine flache Stirnfläche (20) aufweist, um mit einem Verbindungsstift (16P, 18P) des elektronischen Sensorelements (16, 18) eine Kontaktstelle zu bilden.

## Revendications

1. Ensemble capteur (10) comprenant :
- au moins un élément capteur électronique (16, 18) destiné à mesurer une grandeur physique, ledit au moins un élément capteur électronique (16, 18) étant du type monté en surface, et
- deux conducteurs de connexion électrique souples (14) destinés à connecter cet élément capteur électronique (16, 18), qui sont soudés à deux broches de connexion correspondantes (16P, 18P) de cet élément capteur électronique (16, 18), les conducteurs de connexion électrique souples (14) consistant chacun en un conducteur souple (14) doté d'une âme conductrice (A) et d'une gaine isolante (G), la gaine (G) étant interrompue pour séparer une partie dite revêtue (14G) du conducteur, dans laquelle la gaine (G) recouvre l'âme (A), et une partie dite dénudée (14A) du conducteur, dans laquelle la gaine (G) est retirée de l'âme (A), les deux broches de connexion (16P, 18P) de l'élément capteur électronique (16, 18) étant soudées directement aux deux parties dénudées correspondantes (14A) des conducteurs souples (14),
l'ensemble comprenant en outre un corps (12) logeant les conducteurs souples (14) et l'élément capteur (16, 18), ledit corps (12) comprenant des moyens (34, 36, 40, 42, 44, 46, 48, 50) destinés à immobiliser les conducteurs souples dans trois directions perpendiculaires entre elles, désignées respectivement par longitudinale (X), transversale (Y) et verticale (Z), ces moyens d'immobilisation (34, 36, 40, 42, 44, 46, 48, 50) étant répartis dans des première (12A) et seconde (12B) parties du corps (12) qui peuvent être séparées l'une de l'autre entre une configuration dans laquelle les conducteurs souples (14) et l'élément capteur électronique (16, 18) sont montés dans le corps (12) et une configuration dans laquelle l'ensemble capteur (10) est utilisé.

2. Ensemble capteur (10) selon la revendication 1, dans lequel les première (12A) et seconde (12B) parties du corps (12) comprennent des faces de jonction complémentaires (22A, 22B) qui, lorsque ces parties (12A, 12B) se trouvent en une configuration dans laquelle l'ensemble (10) est utilisé, sont en appui l'une contre l'autre et parallèles aux directions longitudinale (X) et transversale (Y),
les conducteurs souples (14) s'étendant parallèlement à la direction longitudinale (X),
les moyens destinés à immobiliser les conducteurs comprenant des moyens d'immobilisation transversaux (34, 36, 40) formés dans la première partie du corps.

3. Ensemble capteur (10) selon la revendication 2, dans lequel les moyens d'immobilisation transversaux (34, 36, 40) comprennent au moins deux butées longitudinales (34) opposées transversalement, s'étendant parallèlement aux parties dénudées (14A) des conducteurs souples (14), formées dans la première partie (12A) du corps (12), entre lesquelles s'étendent des butées de renfort transversales (36), formées dans la première partie (12A) du corps (12), chaque partie dénudée (14A) d'un conducteur s'étendant entre au moins une butée longitudinale (34) et une butée de renfort (36).

4. Ensemble capteur (10) selon la revendication 2 ou 3, dans lequel les moyens d'immobilisation transversaux comprennent des rainures (40), formées dans la première partie (12A) du corps (12), dans lesquelles sont insérées les parties revêtues (14G) des conducteurs souples (14).

5. Ensemble capteur (10) selon l'une quelconque des revendications 1 à 4, dans lequel les moyens destinés à immobiliser les conducteurs comprennent des moyens d'immobilisation longitudinaux (42, 44, 46) formés de manière complémentaire sur les première (12A) et seconde (12B) parties du corps (12), destinés à immobiliser chaque conducteur flexible (14) dans la direction longitudinale en bloquant dans une chicane, formée par ces moyens d'immobilisation longitudinaux (42, 44, 46), une partie d'un conducteur souple (14) choisie parmi la partie dénudée (14A) du conducteur souple (14) et la partie revêtue (14G) du conducteur souple (14).

6. Ensemble capteur (10) selon les revendications 3 et 5 prises ensemble, dans lequel les moyens d'immobilisation longitudinaux comprennent un bossage (42) formé dans la première partie (12A) du corps (12), s'étendant dans la direction transversale entre les butées longitudinales (34), et un évidement complémentaire (44) formé dans la seconde partie (12B) du corps (12), la partie dénudée (14A) de chaque conducteur souple (14) s'étendant le long d'une chicane entre le bossage (42) et l'évidement complémentaire (44).

7. Ensemble capteur (10) selon les revendications 4 et 5 prises ensemble, dans lequel les moyens d'immobilisation longitudinaux comprennent des cales (46) formées dans la seconde partie (12B) du corps, décalées dans la direction longitudinale par rapport aux rainures d'immobilisation transversales (40), la partie revêtue (14G) de chaque conducteur souple (14) s'étendant contre les cales (46) et les rainures correspondantes (40) le long d'une chicane.

8. Ensemble capteur (10) selon l'une quelconque des revendications 2 à 7, dans lequel la première partie (12A) du corps (12) forme, à l'aide des moyens (34, 36, 40, 42) destinés à immobiliser les conducteurs souples (14) disposés sur cette première partie (12A) du corps (12), un support pour le montage intermédiaire de l'ensemble capteur (10), capable de positionner les conducteurs souples (14) pour le soudage, en particulier à l'aide d'une technologie de montage en surface, des broches de connexion (16P, 18P) de l'élément capteur électronique (16, 18) aux parties dénudées correspondantes (14A) des conducteurs souples (14).

9. Ensemble capteur (10) selon l'une quelconque des revendications 1 à 8, dans lequel les moyens destinés à immobiliser les conducteurs souples (14) comprennent des moyens d'immobilisation verticaux formés de manière complémentaire sur les première (12A) et seconde (12B) parties du corps (12), ces moyens d'immobilisation verticaux comprenant des butées de serrage verticales complémentaires (38, 50) formées dans les première (12A) et seconde (12B) parties du corps (12), entre lesquelles est insérée chaque partie dénudée (14A) d'un conducteur, chaque butée de serrage (50) formée dans la seconde partie (12B) du corps (12) étant soumise à une contrainte élastique vers l'autre butée de serrage complémentaire (38) formée dans la première partie (12A) du corps.

10. Ensemble capteur (10) selon l'une quelconque des revendications 1 à 9, dans lequel le corps (12) est constitué de matière plastique, par exemple par moulage.

11. Ensemble capteur (10) selon les revendications 9 et 10 prises ensemble, dans lequel la seconde partie (12B) du corps (12) comprend un élément de maintien en matière plastique (48), déformable élastiquement dans la direction verticale, dans lequel chaque butée de serrage (50) portée par cette seconde partie (12B) du corps (12) est formée.

12. Ensemble capteur (10) selon la revendication 10 ou 11, dans lequel les première (12A) et seconde (12B) parties du corps (12) sont pourvues de moyens complémentaires (28) destinés à les attacher l'une à l'autre par encliquetage.

13. Ensemble capteur (10) selon l'une quelconque des revendications 1 à 12, dans lequel chaque âme (A) d'un conducteur souple (14) est constituée d'une pluralité de brins conducteurs, les brins de la partie dénudée (14A) du conducteur souple (14) étant agglomérés ensemble, la partie dénudée (14A) du conducteur souple (14) étant de préférence aplatie de manière à présenter au moins une face plane (20) pour former une jonction avec une broche de connexion (16P, 18P) de l'élément capteur électronique (16, 18).
